# EUROPEAN PATENT APPLICATION

(11) **EP 3 498 681 A1**
(43) Date of publication of application: **19.06.2019**
(21) Application number: 17207076.5
(22) Date of filing: 13.12.2017
(51) Int. Cl.: C04B 28/04, C04B 28/06, C04B 18/16

(54) **USE OF CARBONATED RECYCLED CONCRETE FINES AS SUPPLEMENTARY CEMENTITIOUS MATERIAL**

(71) Applicant: HeidelbergCement AG, 69120 Heidelberg (DE)
(72) Inventor: SKOCEK, Jan, 69181 Leimen (DE); ZAJAC, Maciej, 69126 Heidelberg (DE); BEN HAHA, Mohsen, 69117 Heidelberg (DE); BOLTE, Gerd, 69198 Schriesheim (DE)
(74) Representative: Zellentin & Partner mbB Patentanwälte

(57) **Abstract**

Method for manufacturing a supplementary cementitious material from recycled concrete fines comprising providing recycled concrete fines as starting material, carbonation of the starting material to provide carbonated material and deagglomerating the carbonated material to form the supplementary cementitious material, use of carbonated recycled concrete fines as supplementary cementitious material in composite binders, supplementary cementitious material consisting essentially of carbonated recycled concrete fines, and composite binders containing carbonated recycled concrete fines as supplementary cementitious material.

## Description

The present invention relates to a use of carbonated recycled concrete fines as supplementary cementitious material in composite binders, to a supplementary cementitious material consisting essentially of carbonated recycled concrete fines, to composite binders containing carbonated recycled concrete fines as supplementary cementitious material and to a method for manufacturing a supplementary cementitious material from recycled concrete fines.

Cement is a widely used and versatile building material. However, the manufacturing of the most common cement, Portland cement, consumes considerable amounts of mineral raw materials and energy (fuel). Thus, there is a long and partly very successful history of replacing the valuable natural resources mineral raw material and fuels like coal by waste, of substituting cement with supplementary cementitious material (SCM) and finding alternative cements. Currently, the most used SCMs are the latent-hydraulic or pozzolanic materials granulated blast-furnace slag (GBFS) and coal fly ashes (FA) respectively. The quantities of these materials characterized by adequate quality are limited globally to only about 20 % of cement production and are unlikely to increase. Application of the mineral addition limestone is limited because of little contribution of this material to the performance. Nonetheless, there is still a need for finding even more efficient means to save energy and natural resources.

Unluckily, the production of the cement is associated with significant CO₂ emissions. Since the demand for building materials and particularly for cement is increasing, the CO₂ emissions would further increase contributing negatively to the climate changes, under business-as-usual. The cement industry has already reached significant reductions in the CO₂ emissions associated with cement production. This is done over the increased energy efficiency, use of alternative fuels including a wide range of wastes and through clinker substitution by supplementary cementitious materials. These efforts need to be further followed to cope with the increasing demand for the cement. Particularly the rate of SCMs use as partial replacements for Portland cement clinker needs to be increased.

Further, an increasing amount of concrete structures is being replaced resulting in a huge amount of demolished concrete that has found only limited use so far. According to US 5,725,655 A and M.V.A. Florea and H.J.H. Brouwers, "Recycled concrete fines and aggregates - the composition of various size fractions related to crushing history", available at https://josbrouwers.bwk.tue.nl/ publications/Conference92.pdf, recycled concrete fines (RCF in the following) ground to proper particle size can be useful aggregate. WO 2007/096671 A1 and WO 2014/040852 A1 improve on this art. WO 2007/096671 A1 suggests to bind together too fine RCF by tumbling and carbonation. WO 2014/040852 A1 proposes to more completely separate the aggregate in RCF from the hardened cement paste by grinding RCF in the presence of carbon dioxide. Thereby, the hardened cement paste carbonates and separates from the aggregate. The carbonated hardened cement paste is proposed to be calcined to provide a binder. However, a calcination results in CO₂ emissions increasing the CO₂ footprint of the final building material.

Still further proposals rely on using RCF in composite binders. Since RCF as such has not enough latent hydraulic or pozzolanic reactivity it is described to grind it together with cement for activation. WO 2004/041746 A1 reports improved reactivity when RCF is first ground separately from the cement and then subjected to a second grinding together with at least 20 % of the cement. According to WO 2013/017391 A1 any material containing at least 15 % calcium silicate hydrate is said to provide a "rapid binder" when ground together with cement. The material can be RCF and is used in an amount of 0.1 to 5 % of the cement. This small amount used is a result of the unfavourable physical characteristics of such materials, namely their high surface area resulting form the C-S-H presence, impairing the workability of concrete made from the cement.

Although these proposals allow beneficial use of RCF it is an ongoing object to provide alternative or preferably more beneficial uses.

Surprisingly it has now been found that carbonated RCF are a reactive and useful supplementary cementitious material and can replace a considerable amount of cement in composite binders.

Thus, the above mentioned problems are solved by a use of carbonated recycled concrete fines as supplementary cementitious material in composite binders, by a supplementary cementitious material consisting essentially of carbonated recycled concrete fines and by composite binders containing carbonated recycled concrete fines as supplementary cementitious material.

The term supplementary cementitious material (abbreviated SCM) is defined herein as materials that have pozzolanic reactivity or latent hydraulic reactivity or both, designated SCM reactivity in the following. One of the possibilities to demonstrate the SCM reactivity is to replace a part of cement by the reactive SCM creating a binder and to compare the strength of such binder with that of binder containing the same amount of non-reactive material. The strength of the SCM-containing binder is appreciably higher than that of the binder with non-reactive material. Hence, SCM does not include mineral additions without SCM reactivity (at least not with an appreciable degree of SCM reactivity) like limestone.

Further, to simplify the description the usual cement chemist notation for oxides: H - H₂O, C - CaO, A - Al₂O₃, F - Fe₂O₃, M - MgO, S - SiO₂ and $ - SO₃ is used. Also, compounds are mostly named by the pure form, without explicit mentioning of solid solutions, foreign ion substitution and impurities etc. as are usual in technical and industrial materials. As one of ordinary skill in the art knows, the exact composition of phases may vary due to substitution with foreign ions. Such compounds are comprised when mentioning the pure form herein unless it is expressly stated otherwise.

Cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like dicalcium silicate obtained by hydrothermal treatment. Composite binder or binder mixture means a mixture containing cement and a supplementary cementitious material. A binder is usually used adding water or another liquid and mostly also aggregate. Typically, admixtures and/or additives are added to the binder and/or the paste.

According to the invention, the fines resulting from concrete demolishing are converted into supplementary cementitious material after separation of particles reusable as aggregate. The exact composition and particle size distribution of RCF depends on the original binder and composition used in the concrete and on the demolishing and grinding procedures applied. Usually, the original aggregate is separated as much as possible and the RCF contain mostly the ground hardened binder paste together with fine sand/aggregates, usually in amounts of 30 to 80 wt.-% of the total material weight.

The use of such RCF in cement and concrete manufacturing is challenging due to inappropriate properties such as high water demand and low (next to no) SCM reactivity. However, carbonation can provide the needed SCM reactivity. Concrete and other cement-based materials undergo a natural carbonation. For structures, the process is slow and only a surface layer is carbonated, see e.g. Hills et al, Statistical analysis of the carbonation rate of concrete, abstract found at http://www.sciencedirect.com/science/article/pii/ S0008884615000496?via%3Dihub. The average carbonation rate of 1999 cases was 4.078 mm/year^{0.5} implying that after e.g. 50 years of service life, the average carbonation depth will be lower than 29 mm. Hence, most of the concrete remains non-carbonated. During recycling, the concrete is crushed into smaller particles that, upon exposure to ambient atmosphere, carbonate readily to a certain extent but by far not enough for the use according to the invention. This carbonation is also designated natural carbonation herein. Typically, the carbonation during concrete recycling can be simulated by exposing fresh hardened concrete to an atmosphere with 0.04 Vol-% CO₂ at 65 % relative humidity (RH) for one week, providing the material is finely ground, i.e. below 200 µm. Compared to a natural carbonation defined like this the RCF used as SCM according to the invention contains at least 1.25 times, preferably 1.5 times, most preferred 1.75 times more CO₂ than is bound by natural carbonation. Typically, the SCM contains calcium carbonate with at least 30 wt-% of the calcium carbonate being other polymorphs than calcite, contrary to the natural carbonation where calcite is the dominant calcium carbonate polymorph formed

The reactivity index of the carbonated RCF, i.e. the SCM according to the invention, is at least 1.1 times, preferably 1.2 times, most preferred 1.3 times, that of limestone (LL according to EN 197-1) at the same replacement level of 30 % of CEM I 32.5 R according to EN 197-1, at 28 days, in mortar. The reactivity index is defined as the ratio of the EN 196-1 mortar strength of the SCM-containing composite binder over the strength of a limestone-containing composite binder.

Thus, the SCM according to the invention is suitable to make composite binders analogously to known SCMs such as ground granulated blast furnace slag, fly ash and oil shale. If the fineness after carbonation is not as desired, i.e. comparable to that of the cement, appropriate fineness is achieved by grinding the SCM according to the invention and/or by co-grinding it with the cement. It is noted that contrary to the prior art using the RCF without carbonation as taught in the mentioned prior art a co-grinding is neither necessary nor preferred to obtain suitable SCM reactivity for the carbonated RCF.

The method for manufacturing a supplementary cementitious material from recycled concrete fines requires RCF in the form of suitably treated demolished concrete as starting material. Thus, after demolishing concrete building structures the coarse demolishing waste is crushed and ground in a manner known as such to provide recycled concrete fines that consist mostly of the ground binder paste. Usually, parts of the fine parts of the original aggregate are present. Original aggregate and non-concrete parts of the demolishing waste are separated by crushing, separation steps if needed (e.g. extracting metal with a magnet) and grinding. It is possible but not preferred to rely on grinding/crushing in the presence of CO₂ as suggested in WO 2014/040852 A1. While that is possible, it is disadvantageous since it would require a drying step.

The chemical and mineralogical composition in terms of oxides and phases of four typical RCF (which contain fine aggregates being mostly quartz) is as follows:

**Table 1**

| | **RCF 1** | **RCF 2** | **RCF 3** | **RCF 4** |
|---|---|---|---|---|
| chemical composition [wt-%] | | | | |
| LOI | 17.98 | 21.59 | 12.23 | 7.89 |
| SiO₂ | 43.02 | 43.63 | 54.72 | 74.15 |
| Al₂O₃ | 6.38 | 5.70 | 6.32 | 3.64 |
| Fe₂O₃ | 3.02 | 2.74 | 2.36 | 1.43 |
| CaO | 24.39 | 21.51 | 18.29 | 10.44 |
| MgO | 1.39 | 1.22 | 1.81 | 0.90 |
| K₂O | 0.80 | 0.76 | 1.00 | 0.77 |
| Na₂O | 0.35 | 0.32 | 0.42 | 0.28 |
| SO₃ | 1.21 | 1.07 | 1.28 | 0.69 |

| minerological composition [wt-%] | | | | |
|---|---|---|---|---|
| Quartz | 28.3 | 28.7 | 39.1 | 58.4 |
| Calcite | 13.9 | 13.6 | 6.2 | 2.7 |
| Dolomite | 2.4 | 1.7 | - | - |

The particle size distribution determined by laser granulometry of RCF useful as starting material for conversion into SCM by carbonation usually conforms to a D₉₀ below 0.5 mm, preferably below 200 µm and most preferred below 100 µm with a Rosin-Rammler slope n from 0.5 to 1.4. If the particles are coarser, they can be sieved and/or ground before or during carbonation to improve carbonation, i.e. ensure faster and more even carbonation. The starting material can also be mixed from different RCF to ensure a more homogenous composition or adjust the phase composition.

It is possible to include additional material into the starting material that accelerates the carbonation process and/or improves the final properties of the SCM. Preferably, substances for enhancing grinding or carbonating process or mixtures of two or more thereof are used as additional material. Typically, additional material will be included in an amount from 0.001 to 1 wt-% with respect to the total starting material. Suitable materials include aqueous solvents like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof, halogenides, ethylenedinitrilotetra-accetic acid (EDTA) or other substances that improve dissolution of CO₂ in the solution. Additionally enzymes such as carbonic anhydrase can be used to enhance carbonation efficiency and modify the properties of the reaction products. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar substances.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinyl-sulfonic acids, styrenesulfonate, citric and other simple organic acids, polysaccharides and phosphonates, polycarboxylates.

Furthermore, it is possible to add admixtures that modify properties of the final composite binder and building material made from it. Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of w/b normally provides an increase of strength, such admixtures are commonly used. Air entraining agents are also able to improve flowability and can be used fore this aim or are need for other reasons such as, but not limited to, density modifications, compactibility improvements etc.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides). It is also possible to add admixtures that are designed to modify the rheology properties to control the setting time, i.e. plasticizers and super-plasticizers. Those can have a retarding impact as well, e.g. lignosulphonates, polycarboxylic acids, etc.

All admixtures are used in the amounts known as such, wherein the amount is adapted to a specific binder and special needs in the known manner.

Additives can be added as well such as e.g. fillers, pigments, reinforcing elements, self-healing agents etc. All these can be added in the amounts known per se.

The starting material is subjected to carbonation as a first step of the method according to the invention. Therein, the starting material is placed inside a carbonation device and subjected to a carbonating atmosphere containing from 10 to 100 Vol-% CO₂ at 1 to 30 bar and 20 to 200 °C for 1 minute to 6 hours. Preferably, the carbonation atmosphere is a gas that contains 15 to 90 Vol-% CO₂ and/or has a pressure of 1 bar or from 1.5 to 3 bar, especially about 2 bar.

The carbonation atmosphere can also be a solution of CO₂, preferably an aqueous solution. The concentration of CO₂ herein ranges from 0.01 to 10 mMol/l, preferably from 0.05 to 1 mMol/l. It is preferred to manufacture the solution by dissolution of CO₂ in an alkaline solution. Suitable is for example a solution of NaOH or KOH, that is contacted with exhaust gas to absorb CO₂. Using a solution as carbonating atmosphere allows higher carbonation degrees, however is more expensive. It also requires the drying of the carbonated starting material.

In still another embodiment the carbonation atmosphere comprises steam and CO₂ at a total pressure from 15 to 30 bar, has a temperature from 100 to 200 °C and contains 15 to 90 Vol-% CO₂.

The carbonation device can be a closed vessel or an open reactor. Examples are a grinding-reacting chamber (e.g. in a mill) or a counter-flow reactor or an autoclave. The important point is that the device enables treatment of the starting material to achieve the desired carbonation extent over the dry and wet direct carbonation process. The device can also be a conveyor travelling through a housing enabling exposure of the starting RCF to a gas or solution characterized by a content of CO₂, preferably by a high CO₂ concentration.

Depending on the device used, the carbonating atmosphere can be provided e.g. by direct exposure to exhaust gas, e.g. from a near-by cement plant or waste incineration, or by introducing carbon dioxide or a carbon dioxide rich gas mixture generated in any known manner. The use of pure CO₂ is possible and provides the fastest carbonation. But it is not preferred since manufacturing pure CO₂ is expensive and environmentally disadvantageous. Thus, the direct use of exhaust gas or using an exhaust gas concentrated in CO₂ is the preferred approach.

A typical exhaust gas from a rotary kiln for clinker manufacturing comprises: 14 - 33 Vol-% CO₂ depending on the clinkering technology, used fuels and raw materials, see e.g. "Carbon dioxide Capture and Storage: Special Report of the intergovernmental panel on climate change", P. Metz, Cambridge University Press, 2005, p. 79. These and similar gases from other sources can be used advantageously as the carbonation atmosphere, they are readily available and need no special equipment or consume energy for treating. Suitable times for carbonation of RCF with such a carbonation atmosphere range from 1 second to 3 hours, preferably from 3 seconds to 1 hour, preferably from 10 seconds to 30 minutes. The temperature will typically range from ambient to that of the exhaust gas as received, i.e. hot exhaust gas will not be purposefully cooled. Heating is possible but not preferred.

In one embodiment, exhaust gas as described is concentrated in CO₂. This can be achieved for example by exhaust gas recirculation (EGR), humidification (EvGT), supplementary firing (SFC) and external firing (EFC). Additionally the separation methods by solvents, e.g. amine scrubbing technology, sorbents, e.g. zeolites and activated carbon, can be used to separate CO₂ from gas mixtures, and also membranes (gas separation membranes that allow one component in a gas stream to pass through faster than the others). Or cryogenics methods (CO₂ can be separated from other gases by cooling and condensation) or any other suitable method. Thereby, a gas comprising higher concentration of CO₂ is obtained with CO₂ concentration of up to 90 % at industrial scale, see e.g. C. E. Baukal, "Oxygen-enhanced combustion", CRC press, 2013. Such treated gas is more expensive, but it allows faster carbonation. Typical carbonation times in such carbonation atmospheres range from 0.5 second to 1 hours, especially from 1 second to 28 minutes. Again, exhaust gas enriched in CO₂ as carbonation atmosphere is usually used at ambient temperature or as obtained, i.e. not purposefully cooled. Heating is possible but not preferred.

In another embodiment exhaust gas from a cement plant operating in the so-called oxyfuel mode is used. In this manufacturing mode the kiln and optionally also the precalciner/heat exchanger are fed with oxygen instead of air to avoid formation of nitrogen oxides. The exhaust gas withdrawn from such plants is richer in CO₂. Thus, oxyfuel exhaust gas provides a very advantageous carbonation atmosphere, comparable to one obtained by enriching "normal" exhaust gas in CO₂.

The carbonated starting material obtained is de-agglomerated in a next step to form the supplemental cementitious material according to the invention. The paste fraction of the SCM obtained contains calcium carbonate and a mixture of amorphous phases comprising mainly transformed remnants of original hydrates, amorphous alumina and/or silica (gel), the silica and/or alumina being possibly partly hydrated. Preferably, not more than 70 wt-% of the calcium carbonate is formed as calcite. The SCM shows low water demand. Additionally, the SCM has high pozzolanic and/or latent hydraulic reactivity thereby providing synergies between calcium carbonate and alumina rich material when reacting in a cementitious matrix. This results in an appreciable evolution of compressive strength of a composite binder and allows a significant reduction of the clinker content of such binder.

As a rule, the SCM obtained by carbonation and de-agglomeration has a suitable fineness, since the particle size distribution of RCF used as starting material is fine enough. If the fineness of the SCM is not sufficient, or if an especially high fineness is desired, the SCM can be ground in known devices and in a known manner, either together or without other binder components, e.g. cement. Grinding aids can be added or may be present from grinding the demolished concrete. The reactivity of the supplemental cementitious material according to the invention allows its use in composite binders in an amount from 1 to 80 wt-%, preferably from 5 to 50 wt-%. Suitable cements are Portland cement (OPC), calcium sulfoaluminate cement (CSA), calcium aluminate cement (CAC) and other hydraulic cements including lime. The cement is usually present in an amount from 5 to 95 wt-%, preferably 30 to 80 wt-% in the binder. In addition, usual additives and/or admixtures can be used as described above for adding to the RCF. Naturally, the amounts of all components in a specific binder add up to 100 %, so if SCM and cement are the sole components their amounts add up to 100 %, when there are other components, the amount of SCM and cement is less than 100 %.

Also, further SCMs like slag, fly ash and other main cement constituents according to EN 197-1 can be contained. Preferably, only the SCM according to the invention is contained since that is technically easier. Fly ash is often added to concrete, this is also possible for concrete from the composite binder according to the invention.

The fineness of the cement and SCM are adjusted to the intended use as known per se. Usually, the cement has a D₉₀ ≤ 90 µm, preferably ≤ 60 µm and a slope n from 0.6 to 1.4, preferably from 0.7 to 1.2, determined by laser granulometry and calculated by the Rosin-Rammler model.

The composite binder according to the invention is useful to applications known per se for cements according to EN 197-1 and other common hydraulic binders.

The invention will be illustrated further with reference to the example that follows, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example

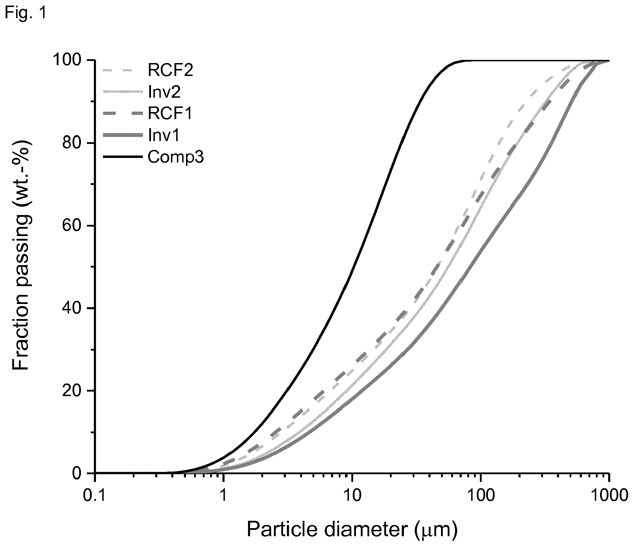

To simulate RCF a mortar CEM II/B-V containing 20 wt-% fly ash and a mortar CEM III/A containing 50 wt-% slag were hydrated at 60 °C for 1 month, crushed and ground. The obtained ground hardened paste had the particle size distributions shown in figure 1 and contained the following phases: aggregates from the concrete, unreacted cement phase and unreacted slag/fly ash particles, C-S-H phase, portlandite, AFt and AFm phases, iron bearing hydrates like hydrogarnets, iron hydroxide, goethite, magnesium bearing hydrates like hydrotalcite and brucite and minor phases as known per se. The chemical composition was typical for standard CEM II/B-V as defined in EN 196-1. This hardened paste is comparable to the real industrial RCF in the beginning of the recycling process, i.e. it is only little carbonated.

Natural carbonation was simulated by exposing the obtained ground hardened paste to an atmosphere with 0.04 Vol-% CO₂ at 65 % RH for one week, resulting in two RCF samples from the two used binders. These are also designated naturally carbonated RCF in the following and correspond to the typical RCF at the end of the recycling process, i.e. such that can be sampled from a storage pile for RCF.

According to the invention, the ground hardened paste samples were carbonated in a carbonation atmosphere containing 100 Vol-% CO₂ at 2 bar above ambient pressure and at ambient temperature for 2 hours to obtain the SCM.

Thermogravimetry was used to determine the amount of bound CO₂. Samples of the ground hardened pastes, the RCFs, and the SCM according to the invention were heated between approximately 20 and 1050 °C. The amount of bound CO₂ was calculated from the mass loss between 450 °C and 850 °C and normalized to the ignited cement paste mass. Table 3 presents the results.

**Table 3**

| sample | ground hardened paste | RCF naturally carbonated | SCM according to invention |
|---|---|---|---|
| from cement | bound CO₂ [g/100 g of ignited cement paste mass] | | |
| CEM II/B-V | 3 | 7 | 12 |
| CEM III/A | 3 | 11 | 22 |

The results demonstrate that during the time used the ground hardened paste samples simulating RCF could be successfully carbonated. For RCF1 from CEM II/B-V the bound CO₂ in the SCM was 1.7 times that of the sample after simulated natural carbonation, for RCF2 from CEM III/A it was 2.0 times that of the RCF.

Each RCF and SCM was blended with CEM I 32,5 R in a weight ratio 30:70 to obtain binder samples. Three further comparison binder samples were made by blending the same CEM I with 30 % limestone (LL according to EN 197-1), 30 % fly ash (V according to EN 197-1) and 20 % limestone + 10 % fly ash, respectively. The samples are listed in the following table 4.

**Table 4**

| Sample contains 70 % CEM I and | designation |
|---|---|
| 30 % SCM acc. to invention | Inv1 |
| 30 % naturally carbonated RCF | RCF1 |
| 30 % fly ash | Comp3 |
| 30 % limestone | Comp4 |
| 20 % limestone+10 % fly ash | Comp5 |
| 30 % SCM acc. to invention | Inv2 |
| 30 % naturally carbonated RCF | RCF2 |

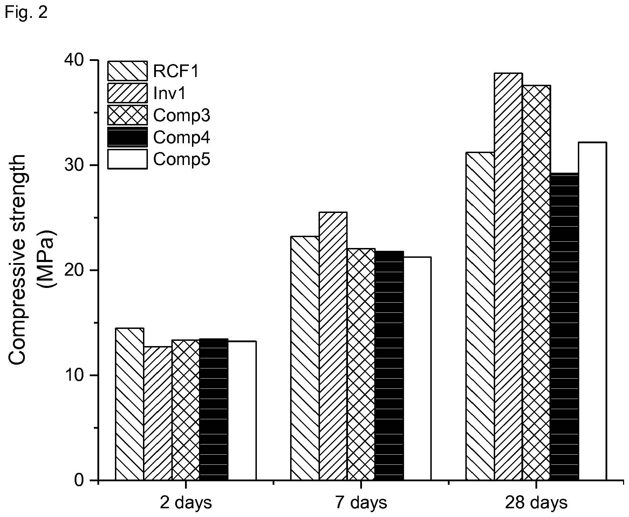

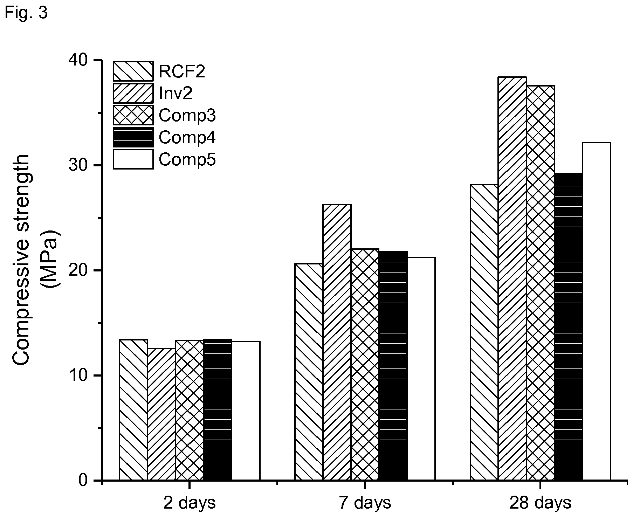

Strength measurements were made with all samples according to DIN EN 196-1. The results are presented in figures 2 and 3. Figure 2 shows the SCM from CEM II/B-V compared to all comparison samples and figure 3 that of the SCM from CEM III/A. It is readily apparent that Inv1 and Inv2, the SCMs according to the invention, had a considerable SCM reactivity. Strength obtained was even higher than for Comp3, fly ash as SCM. In contrast, both RCF were much less reactive and not suitable as SCM.

Thus, the present invention allows to turn waste or recycled material into added value products, namely providing high reactivity SCM. The SCM according to the invention allows high clinker replacement and provides an opportunity to increase the composite binder production rate by providing a new source of reactive SCM. In addition, the method according to the invention provides a significant potential for CO₂ sequestration from exhaust gas, especially from cement plant exhaust gas. Since cement plant exhaust gas occurs in close proximity to where the SCM is needed for making composite binders the method needs very little investment. The carbonation device can be placed between the cement plant exhaust gas filter and its stack. It might even be beneficial to place it before the filter to achieve some filtering of the exhaust gas.

## Claims

1. Method for manufacturing a supplementary cementitious material from recycled concrete fines, comprising the steps:
- providing recycled concrete fines as starting material
- carbonation of the starting material in a carbonation atmosphere providing carbonated starting material, and
- de-agglomerating the carbonated starting material to form the supplementary cementitious material.

2. Method according to claim 1, wherein the recycled concrete fines are mixed with additional material to form the starting material.

3. Method according to claim 1 or 2, wherein the supplementary cementitious material has or is ground to a particle size distribution of D₉₀ below 90 µm (determined by laser granulometry), preferably ≤ 60 µm, and a Rosin-Rammler slope n from 0.6 to 1.4, preferably from 0.7 to 1.2.

4. Method according to anyone of claims 1 to 3, wherein carbonation is carried out until the supplementary cementitious material contains 1.25 times, preferably 1.5 times, most preferred 1.75 times more CO₂ than the starting material.

5. Method according to anyone of claims 1 to 4, wherein the carbonation atmosphere contains from 10 to 100 Vol-% CO₂, preferably from 15 to 90 Vol-%.

6. Method according to anyone of claims 1 to 5, wherein the carbonation atmosphere is at a pressure from 1 to 30 bar, preferably from 1 to 3 bar or from 15 to 30 bar.

7. Method according to anyone of claims 1 to 6, wherein the carbonation atmosphere is at a temperature from 20 to 200 °C.

8. Method according to anyone of claims 1 to 7, wherein exhaust gas from a cement plant or from waste incineration is used as the carbonation atmosphere.

9. Supplementary cementitious material consisting essentially of carbonated recycled concrete fines, wherein the supplementary cementitious material comprises calcium carbonate, amorphous silica and amorphous alumina.

10. Supplementary cementitious material according to claim 9 obtained by a method according to anyone of claims 1 to 8.

11. Supplementary cementitious material according to claim 9 or 10, wherein the reactivity index is at least 1.1, preferably 1.2, most preferred 1.3 times that of limestone (LL according to EN 197-1) at the same replacement level of 30 % of CEM I 32.5 R according to EN 197-1, D90, at 28 days, in mortar.

12. Supplementary cementitious material according to anyone of claims 9 to 11, wherein at least 30 wt-% of the contained calcium carbonate is in the form of other polymorphs than calcite.

13. Use of carbonated recycled concrete fines as supplementary cementitious material in composite binders.

14. Composite binders containing carbonated recycled concrete fines as supplementary cementitious material.

15. Composite binder according to claim 14 comprising 1 to 80 % supplementary cementitious material according to one of claims 8 to 11 and 99 to 20 % cement.

16. Composite binder according to claim 14 or 15, wherein the cement is Portland cement, calcium sulfoaluminate cement, calcium aluminate cement or lime, preferably Portland cement.

17. Composite binder according to anyone of claims 14 to 16, wherein the binder additionally contains additives and/or admixtures.

18. Composite binder according to claim 17, wherein the admixtures are at least one of water reducing agents, plasticizers, air entraining agents, and retarders.

19. Composite binder according to claim 17 or 18, wherein the additives are at least one of fillers, pigments, reinforcing elements, and self-healing agents.
